(19) **Europäisches Patentamt** / **European Patent Office** / **Office européen des brevets**

(11) **EP 4 549 262 A1**

(12) **EUROPEAN PATENT APPLICATION**
published in accordance with Art. 153(4) EPC

(43) Date of publication:
07.05.2025 Bulletin 2025/19

(21) Application number: 23831119.5

(22) Date of filing: 15.06.2023

(51) International Patent Classification (IPC):
*B60T 7/02* (2006.01)  *B60T 8/172* (2006.01)
*B60T 8/1761* (2006.01)

(52) Cooperative Patent Classification (CPC):
B60T 7/02; B60T 8/172; B60T 8/1761

(86) International application number:
PCT/JP2023/022205

(87) International publication number:
WO 2024/004671 (04.01.2024 Gazette 2024/01)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.06.2022 JP 2022103933

(71) Applicant: **Hitachi Astemo, Ltd.**
**Ibaraki 312-8503 (JP)**

(72) Inventors:
• **YAMAOKA Takumi**
**Hitachinaka-shi, Ibaraki 312-8503 (JP)**
• **TSUDA Fumiya**
**Hitachinaka-shi, Ibaraki 312-8503 (JP)**

(74) Representative: **Plougmann Vingtoft a/s**
**Strandvejen 70**
**2900 Hellerup (DK)**

(54) **VEHICLE BRAKE CONTROL DEVICE**

(57) A vehicle brake control device includes a controller that controls a braking force of a wheel brake based on an operation amount of a brake operating member. When the operation amount (operation angle $\theta$) of the brake operating member is equal to or less than a first predetermined value $\theta$th1, the controller starts release determination of determining whether the brake operating member is loosened (S6, S7). When the operation amount decreases from the first predetermined value $\theta$th1 during the release determination (S6: Yes), the controller determines that the brake operating member is loosened (S7).

FIG.2

START

DETECT OPERATION ANGLE $\theta$ — S1

$\theta \geq \theta$ s?
$\theta$ s: START THRESHOLD — S2
No / Yes

CALCULATE COMMAND CURRENT VALUE $A_n$ BASED ON $\theta$ AND VEHICLE BODY DECELERATION — S3

$A_n = \min(A_n, A_{n-1} + Au)$
Au: UPPER LIMIT — S4

$\theta \leq \theta$ th1? — S5
No / Yes

DOES $\theta$ CONTINUE TO DECREASE FOR FIRST PREDETERMINED TIME T1? — S6
No / Yes

F=1
F: RELEASE FLAG — S7

$A_n \geq Ath$?
$A_n$: COMMAND CURRENT VALUE
Ath: THRESHOLD — S8
Yes / No

D=D1
D: PRESSURE REDUCTION AMOUNT
D1: FIRST PRESSURE REDUCTION AMOUNT — S9

D=D2
D2: SECOND PRESSURE REDUCTION AMOUNT
(D2<D1) — S10

$A_n = A_{n-1} - D$ — S11

DOES $\theta$ INCREASE CONTINUOUSLY FOR SECOND PREDETERMINED TIME T2? — S12
Yes / No

$\theta \leq \theta$ th2? — S13
No / Yes

F=0 — S16

F=0 — S14

$A_n = 0$ — S15

END

EP 4 549 262 A1

## Description

Technical Field

The present invention relates to a vehicle brake control device.

Background Art

In the related art, as a vehicle brake control device, a device has been known in which release determination is performed to determine whether a brake lever is loosened based on a wheel cylinder pressure detected by a pressure sensor (see JP2008-195138A).

Summary of Invention

However, in a vehicle brake control device that does not include a pressure sensor, release determination as in the related art cannot be performed.

Therefore, an object of the invention is to favorably perform release determination of a brake operating member even in a vehicle brake control device that does not include a pressure sensor.

In order to solve the above problem, the invention provides a vehicle brake control device including a controller that controls a braking force of a wheel brake based on an operation amount of a brake operating member.

When the operation amount of the brake operating member is equal to or less than a first predetermined value, the controller starts release determination of determining whether the brake operating member is loosened. When the operation amount decreases from the first predetermined value during the release determination, the controller determines that the brake operating member is loosened.

According to the configuration, since the release determination is performed based on the operation amount of the brake operating member, the release determination of the brake operating member can be performed favorably even in a vehicle brake control device that does not include a pressure sensor.

When the operation amount continuously decreases for a first predetermined time during the release determination, the controller may determine that the brake operating member is loosened.

According to the configuration, since it is determined in the release determination whether the operation amount continuously decreases for the first predetermined time, the determination accuracy of the release determination can be improved.

The controller may set a release flag when it is determined that the brake operating member is loosened, and remove the release flag when the operation amount is equal to or less than a second predetermined value smaller than the first predetermined value.

According to the configuration, since the release flag is removed when the operation amount is equal to or less than the second predetermined value smaller than the first predetermined value, pressure reduction control performed when the release flag is set can be ended at an appropriate timing.

The controller may remove the release flag in a case where the operation amount increases when the release flag is set.

According to the configuration, since the release flag is removed in the case where the operation amount increases when the release flag is set, the pressure reduction control performed with the release flag being set can be ended with re-input of the brake operating member as a trigger.

The controller may remove the release flag in a case where the operation amount continuously increases for a second predetermined time when the release flag is set.

According to the configuration, since the determination as to the re-input of the brake operating member is performed based on a fact that the operation amount continuously increases for the second predetermined time, the determination accuracy of the determination as to the re-input of the brake operating member can be improved.

The vehicle brake control device may further include an angle sensor configured to detect an angle of the brake operating member. The controller may acquire, as the operation amount, an angle detected by the angle sensor.

According to the configuration, an inexpensive vehicle brake control device can be provided by using an angle sensor.

Brief Description of Drawings

[FIG. 1] FIG. 1 is a diagram illustrating a configuration of a motorcycle including a vehicle brake control device according to an embodiment.
[FIG. 2] FIG. 2 is a flowchart illustrating an operation of a controller.
[FIG. 3] FIG. 3 is a time chart illustrating a specific example of an operation of the controller.
[FIG. 4] FIG. 4 is a flowchart illustrating an operation of the controller according to a modification.
[FIG. 5] FIG. 5 is a graph illustrating a method of setting a command current value by the controller according to a modification.

Description of Embodiments

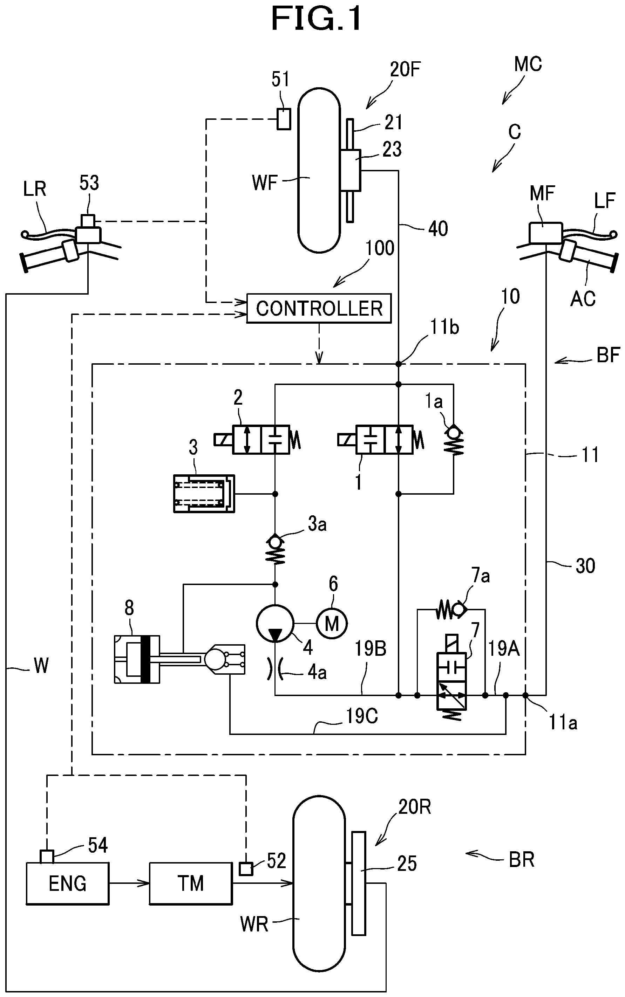

Hereinafter, an embodiment will be described in detail with reference to the drawings as appropriate.
As illustrated in FIG. 1, a motorcycle MC includes an engine ENG, a transmission TM, and a vehicle brake control device C.

The engine ENG is a driving source that applies a driving force to a rear wheel WR, and is coupled to the rear wheel WR via the transmission TM. That is, in the motorcycle MC of the embodiment, the rear wheel WR is a driving wheel and a front wheel WF is a driven wheel. The engine ENG is provided with a throttle sensor 54 that detects an opening degree of a throttle valve of the engine ENG. The opening degree of the throttle valve increases as an operation amount of an accelerator AC increases. The transmission TM is a mechanism that changes output of the driving force of the engine ENG and transmits the driving force to the rear wheel WR. A speed detection sensor 52 is provided near an output shaft of the transmission TM.

The speed detection sensor 52 is a sensor (so-called speedometer sensor) that detects a wheel speed of the rear wheel WR, and detects a wheel speed corresponding to a speed displayed by a speedometer (not shown). The speed detection sensor 52 has a different detection mode from a wheel speed sensor 51 that detects a wheel speed of the front wheel WF. The wheel speed sensor 51 is a sensor that generates a pulse wave as the wheel rotates.

The vehicle brake control device C includes a brake system BF of the front wheel WF, a brake system BR of the rear wheel WR, and a controller 100.

The brake system BF mainly includes a front brake lever LF, a master cylinder MF, a hydraulic pressure unit 10, a front brake 20F as an example of a wheel brake, a pipe 30 connecting the master cylinder MF and an input port 11a of the hydraulic pressure unit 10, and a pipe 40 connecting an output port 11b of the hydraulic pressure unit 10 and the front brake 20F.

The front brake lever LF is an operating lever for operating the front brake 20F, is disposed on the right side of a handlebar of the motorcycle MC, and can be operated by a rider's right hand. The front brake lever LF is connected to the front brake 20F via the master cylinder MF, the pipe 30, the hydraulic pressure unit 10, and the pipe 40.

The master cylinder MF is a device that outputs a hydraulic pressure corresponding to an operation amount of the front brake lever LF.

The front brake 20F is a brake that brakes the front wheel WF. The front brake 20F mainly includes a brake rotor 21, a brake pad (not shown), and a wheel cylinder 23 that generates a brake force (braking force) by pushing the brake pad against the brake rotor 21 by a hydraulic pressure output from the master cylinder MF.

The hydraulic pressure unit 10 is a unit that generates a braking force of the front brake 20F by applying a hydraulic pressure to the front brake 20F. The hydraulic pressure unit 10 is implemented by disposing various solenoid valves and the like on a pump body 11 that is a base body having a fluid line (a hydraulic pressure line) through which a brake fluid flows. In a normal state, a continuous fluid line runs from the input port 11a to the output port 11b of the pump body 11, so that the hydraulic pressure output from the master cylinder MF is transmitted to the front brake 20F.

On a hydraulic pressure line connecting the input port 11a and the output port 11b, a pressure regulator 7 is provided that changes the hydraulic pressure applied to the front brake 20F in accordance with a command current value output from the controller 100. The pressure regulator 7 is a normally open proportional solenoid valve, and is capable of adjusting a difference between a hydraulic pressure upstream and a hydraulic pressure downstream in accordance with the command current value. Specifically, the pressure regulator 7 increases the difference between the hydraulic pressure upstream and the hydraulic pressure downstream of the pressure regulator 7 as the magnitude of the command current value increases. At the pressure regulator 7, a check valve 7a is provided in parallel thereto that allows only a flow to an output port 11b side.

An inlet valve 1, which is a normally open solenoid valve, is disposed on a hydraulic pressure line between the pressure regulator 7 and the output port 11b. At the inlet valve 1, a check valve 1a is provided in parallel thereto that allows only a flow to a pressure regulator 7 side.

A reflux hydraulic pressure line 19B connected to a hydraulic pressure line between the pressure regulator 7 and the inlet valve 1 is provided from a hydraulic pressure line between the output port 11b and the inlet valve 1 via an outlet valve 2 formed of a normally closed solenoid valve.

A reservoir 3 for temporarily absorbing a surplus brake fluid, a check valve 3a, a pump 4, and an orifice 4a are arranged in this order from an outlet valve 2 side on the reflux hydraulic pressure line 19B. The check valve 3a is disposed so as to allow only a flow to the hydraulic pressure line between the pressure regulator 7 and the inlet valve 1. The pump 4 is driven by a motor 6, and is provided to generate a pressure toward the hydraulic pressure line between the pressure regulator 7 and the inlet valve 1. The orifice 4a attenuates pulsation of the pressure of the brake fluid discharged from the pump 4 and pulsation generated by operation of the pressure regulator 7.

An introduction hydraulic pressure line 19A, which connects the input port 11a and the pressure regulator 7, and a portion between the check valve 3a and the pump 4 in the reflux hydraulic pressure line 19B are connected by a suction hydraulic pressure line 19C. A mechanical suction valve 8 is provided in the suction hydraulic pressure line 19C.

The suction valve 8 switches between a state of opening the suction hydraulic pressure line 19C and a state of blocking the suction hydraulic pressure line 19C. The suction valve 8 is normally closed, and is opened based on a difference between a hydraulic pressure of a hydraulic fluid on a master cylinder MF side and a hydraulic pressure of a hydraulic fluid on a suction port side of the pump 4 which is a vacuum pressure in operation of the pump 4.

In the hydraulic pressure unit 10 configured as described above, in a normal state, each solenoid valve is not energized, and the brake hydraulic pressure introduced from the input port 11a is output to the output port 11b through the pressure regulator 7 and the inlet valve 1, and is applied to the front brake 20F as it is. When reducing an excessive brake hydraulic pressure of the front brake 20F, for example, when performing anti-locking braking control, the inlet valve 1 is closed and the outlet valve 2 is opened to allow the brake fluid to flow to the reservoir 3 through the reflux hydraulic pressure line 19B, so that the brake fluid of the front brake 20F can be drained. For example, in a case of increasing the hydraulic pressure of the front brake 20F when the front brake lever LF is not operated by the rider, the suction valve 8 is opened by driving the motor 6, and the brake fluid can be actively supplied to the front brake 20F by an increased pressure of the pump 4. Further, when it is desired to adjust the degree of the pressure increase of the front brake 20F, the adjustment can be performed by adjusting a current flowing through the pressure regulator 7.

The brake system BR mainly includes a rear brake lever LR as an example of a brake operating member, an angle sensor 53, a rear brake 20R, and a wire W connecting the rear brake lever LR and the rear brake 20R.

The rear brake lever LR is an operating lever for operating the rear brake 20R, is disposed on the left side of the handlebar of the motorcycle MC, and can be operated by the rider's left hand. The rear brake lever LR is connected to the rear brake 20R via the wire **W.**

The angle sensor 53 is a sensor configured to detect an operation angle of the rear brake lever LR.

The rear brake 20R is a brake that brakes the rear wheel WR, and is a mechanical brake that operates when a force generated at the time the rear brake lever LR is gripped is transmitted via the wire **W.** The rear brake 20R cannot be operated by the front brake lever LF. The rear brake 20R is, for example, a drum brake, and includes a drum 25, a brake shoe (not shown), and a return spring (not shown) .

The drum 25 is rotatable integrally with the rear wheel WR. The brake shoe is rotatable between a contact position where the brake shoe comes into contact with an inner peripheral surface of the drum 25 and a separation position where the brake shoe is separated from the inner peripheral surface of the drum 25. The return spring biases the brake shoe from the contact position to the separation position. When the rider grips the rear brake lever LR, the wire W is pulled by the rear brake lever LR, whereby the brake shoe rotates from the separation position toward the contact position against a biasing force of the return spring.

The controller 100 includes, for example, a central processing unit (CPU), a random access memory (RAM), a read only memory (ROM), and an input and output circuit. The controller 100 controls the hydraulic pressure unit 10 by performing various types of calculation processing based on inputs from the wheel speed sensor 51, the speed detection sensor 52, the angle sensor 53, and the throttle sensor 54, and programs, data, and the like stored in the ROM.

The controller 100 can execute braking force control of controlling the braking force of the front brake 20F based on an operation amount of the rear brake lever LR. The controller 100 acquires, as the operation amount, an operation angle $\theta$ of the rear brake lever LR detected by the angle sensor 53. The controller 100 starts the braking force control when the operation angle $\theta$ is equal to or greater than a start threshold $\theta$s. The controller 100 ends the braking force control when the operation angle $\theta$ is equal to or less than a second predetermined value $\theta$th2 during execution of the braking force control.

During the braking force control, the controller 100 executes pressure increase control, release determination, and pressure reduction control. In other words, a brake control method by the controller 100 includes a pressure increase step of executing the pressure increase control, a release determination step of performing the release determination, and a pressure reduction step of executing the pressure reduction control.

The pressure increase control is control of bringing the hydraulic pressure of the front brake 20F into an increased state than when the controller 100 does not control the hydraulic pressure unit 10. During the pressure increase control, the controller 100 controls the braking force (hydraulic pressure) of the front brake 20F based on the operation on the rear brake lever LR.

Specifically, the controller 100 drives the motor 6 and controls the pressure regulator 7 to execute the pressure increase control. The controller 100 calculates the command current value to be output to the pressure regulator 7 based on the operation angle $\theta$ and a vehicle body deceleration. Here, the vehicle body deceleration can be calculated based on, for example, the wheel speed acquired from the wheel speed sensor 51. The controller 100 increases the command current value as the operation angle $\theta$ increases, and increases the command current value as the magnitude of the vehicle body deceleration decreases.

In the pressure increase control, the controller 100 limits an increase in the braking force such that the amount of increase in the braking force (hydraulic pressure) of the front brake 20F per unit time is equal to or less than an upper limit. Specifically, for example, the controller 100 limits the increase in the braking force of the front brake 20F by calculating the command current value using the following equation (1).

$$A_n = \min(A_n, \ A_{n-1} + Au) \quad (1)$$

$A_n$: a current value of the command current value

$A_{n-1}$: a previous value of the command current value

$A_u$: the upper limit (fixed value)

That is, the controller 100 compares the current value $A_n$ of the command current value with a value obtained by adding the upper limit $A_u$ to the previous value $A_{n-1}$ of the command current value, and determines the smaller value as the current value $A_n$ of the command current value.

The release determination is processing of determining whether the rear brake lever LR is loosened during the pressure increase control. The controller 100 starts the release determination when the operation angle $\theta$ of the rear brake lever LR is equal to or less than a first predetermined value $\theta$th1. When the operation angle $\theta$ decreases from the first predetermined value $\theta$th1 during the release determination, the controller 100 determines that the rear brake lever LR is loosened. Specifically, when the operation angle $\theta$ continuously decreases for a first predetermined time T1 during the release determination, the controller 100 determines that the rear brake lever LR is loosened.

The determination as to whether the operation angle $\theta$ continuously decreases for the first predetermined time T1 may be made by, for example, adopting a method of performing a control loop of the pressure increase control a plurality of times, and determining that the operation angle $\theta$ continuously decreases for the first predetermined time T1 when a current value of the operation angle $\theta$ is smaller than previous values in all the plurality of control loops. Specifically, for example, it is sufficient to start time measurement by a timer when the operation angle $\theta$ is equal to or less than the first predetermined value $\theta$th1, and to determine whether the current value of the operation angle $\theta$ is smaller than the previous values in all of the plurality of control cycles executed until the timer reaches the first predetermined time T1. The timer may be reset when the measured time is equal to or longer than the first predetermined time T1.

As another determination method, for example, a method of referring to a history of a plurality of operation angles $\theta$ spanning a period of the first predetermined time T1 backward from the start of the release determination and determining that the operation angle $\theta$ continuously decreases for the first predetermined time T1 based on the history of the operation angle $\theta$ is exemplified. In this method, it is not necessary to use a timer.

When it is determined that the rear brake lever LR is loosened, the controller 100 sets a release flag F indicating that the rear brake lever LR is loosened, and executes the pressure reduction control while the release flag F is set.

The pressure reduction control is control of gradually reducing the braking force of the front brake 20F when it is determined that the rear brake lever LR is loosened in the release determination. Here, "gradually reducing the braking force of the front brake 20F" means reducing the braking force of the front brake 20F at a gradient lower than a gradient adopted when reducing the braking force at the highest speed.

The controller 100 controls the pressure regulator 7 with the motor 6 stopped to execute the pressure reduction control. In a case where the command current value $A_n$ to the pressure regulator 7 adopted when it is determined that the rear brake lever LR is loosened is equal to or greater than a threshold $A_{th}$, the controller 100 sets a first pressure reduction amount D1. In the following description, the "command current value $A_n$ adopted when it is determined that the rear brake lever LR is loosened" is also simply referred to as a "command current value $A_n$ at the time of release determination".

When the command current value $A_n$ at the time of release determination is less than the threshold $A_{th}$, the controller 100 sets a second pressure reduction amount D2 smaller than the first pressure reduction amount D1. During the pressure reduction control, the controller 100 sets, as the current value $A_n$ of the command current value, a value obtained by subtracting a set pressure reduction amount D (the first pressure reduction amount D1 or the second pressure reduction amount D2) from the previous value $A_{n-1}$ of the command current value.

During the pressure reduction control, that is, in a state of the release flag F being set, if the operation angle $\theta$ is equal to or less than the second predetermined value $\theta$th2 smaller than the first predetermined value $\theta$th1, the controller 100 removes the release flag F and ends the pressure reduction control (braking force control). When the operation angle $\theta$ increases during the pressure reduction control, that is, in the state of the release flag F being set, the controller 100 removes the release flag F, ends the pressure reduction control, and resumes the pressure increase control. In the embodiment, in a case where the operation angle $\theta$ continuously increases for a second predetermined time T2 when the release flag F is set, the controller 100 removes the release flag F.

The determination as to whether the operation angle $\theta$ continuously increases for the second predetermined time T2 may be made by, for example, adopting a method of performing a control loop of the pressure reduction control a plurality of times, and determining that the operation angle $\theta$ continuously decreases for the second predetermined time T2 when a current value of the operation angle $\theta$ is larger than previous values in all of the plurality of control loops. The second predetermined time T2 may be a value equal to or different from that of the first predetermined time T1.

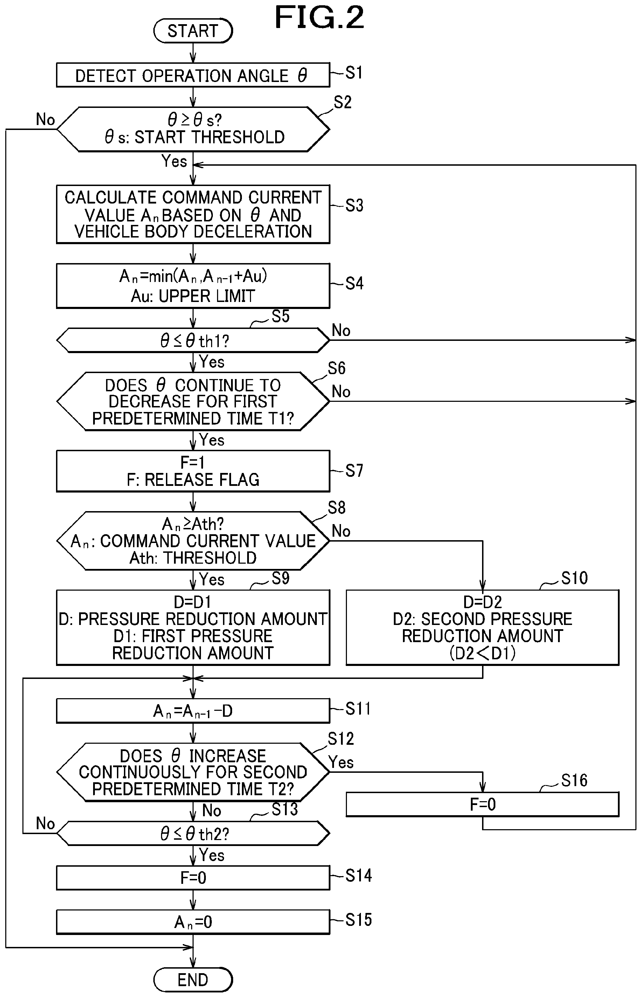

Next, the operation of the controller 100 will be described in detail. The controller 100 repeatedly executes the processing shown in FIG. 2 at all times.

In the processing of FIG. 2, the controller 100 first starts acquiring the operation angle $\theta$ of the rear brake lever LR from the angle sensor 53 (S1). After step S1, the controller 100 determines whether the operation angle $\theta$ is equal to or greater than the start threshold $\theta$s

(S2). When it is determined in step S2 that $\theta < \theta s$ (No), the controller 100 ends the processing.

When it is determined in step S2 that $\theta \geq \theta s$ (Yes), the controller 100 starts the pressure increase control (S3 to S6). In the pressure increase control, the controller 100 calculates the command current value $A_n$ based on the operation angle $\theta$ and the vehicle body deceleration (S3). After step S3, the controller 100 compares the command current value $A_n$ calculated in step S3 with a value obtained by adding the upper limit Au to the previous value $A_{n-1}$ of the command current value, and sets the smaller value as the current value $A_n$ of the command current value (S4).

In the pressure increase control, the controller 100 outputs the command current value to the pressure regulator 7 and drives the motor 6, and a timing to start driving the motor 6 may be set to an appropriate timing.

After step S4, the controller 100 determines whether the operation angle $\theta$ is equal to or less than the first predetermined value $\theta th1$ (S5). When it is determined in step S5 that $\theta \leq \theta th1$ (Yes), the controller 100 performs the release determination (S6, S7).

In the release determination, the controller 100 determines whether the operation angle $\theta$ continuously decreases for the first predetermined time T1 (S6). When it is determined in step S6 that the operation angle $\theta$ continuously decreases for the first predetermined time T1 (Yes), the controller 100 determines that the rear brake lever LR is loosened, and sets the release flag F, that is, sets F = 1 (S7).

When it is determined to be No in step S5 or step S6, the controller 100 returns to the processing of step S3. After step S7, the controller 100 executes the pressure reduction control (S8 to S15). When starting the pressure reduction control, the controller 100 stops the motor 6, and a timing of stopping the motor 6 may be set to an appropriate timing.

In the pressure reduction control, the controller 100 determines whether the command current value $A_n$ at the time of release determination is equal to or greater than the threshold Ath (S8). When it is determined in step S8 that $A_n \geq Ath$ (Yes), the controller 100 sets the first pressure reduction amount D1 as the pressure reduction amount D (S9). When it is determined in step S8 that $A_n < Ath$ (No), the controller 100 sets the second pressure reduction amount D2 smaller than the first pressure reduction amount D1 as the pressure reduction amount D (S10).

After step S9 or step S10, the controller 100 sets the current value $A_n$ of the command current value to a value that is obtained by subtracting the pressure reduction amount D from the previous value $A_{n-1}$ of the command current value (S11). After step S11, the controller 100 determines whether the operation angle $\theta$ continuously increases for the second predetermined time T2 (S12).

When it is determined in step S12 that the operation angle $\theta$ does not continuously increase for the second predetermined time T2 (No), the controller 100 determines whether the operation angle $\theta$ is equal to or less than the second predetermined value $\theta th2$ (S13). When it is determined in step S13 that $\theta \leq \theta th2$ is not satisfied (No), the controller 100 returns to the processing of step S11.

When it is determined in step S13 that $\theta \leq \theta th2$ (Yes), the controller 100 removes the release flag F, that is, sets F = 0 (S14). After step S14, the controller 100 sets the command current value $A_n$ to 0 (S15), and ends the processing.

When it is determined in step S12 that the operation angle $\theta$ continuously increases for the second predetermined time T2 (Yes), the controller 100 sets the release flag F to 0 (S16) and returns to the processing of step S3. That is, when the operation angle $\theta$ continuously increases for the second predetermined time T2 during the pressure reduction control, the controller 100 ends the pressure reduction control and resumes the pressure increase control.

Next, a specific example of the operation of the controller 100 will be described in detail.

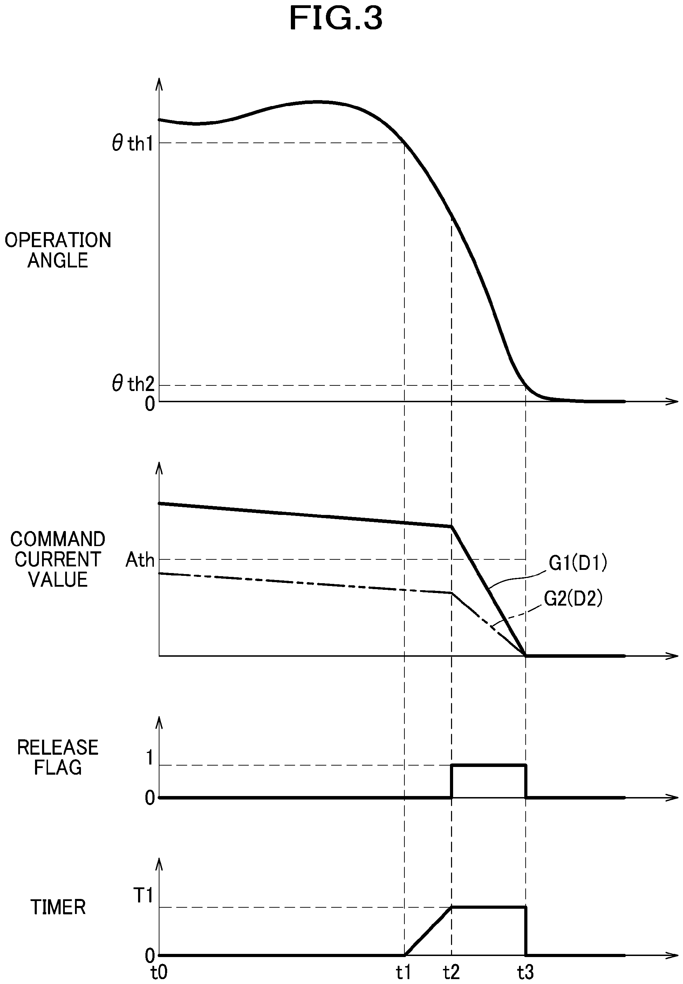

For example, when the rider operates the rear brake lever LR during traveling of the motorcycle MC, as illustrated in FIG. 3, the controller 100 mainly sets the command current value $A_n$ based on the operation angle $\theta$ and the vehicle body deceleration to execute the pressure increase control (time-point t0 to time-point t1). When the operation angle $\theta$ is equal to or less than the first predetermined value $\theta th1$ as a result of the rider loosening the operation on the rear brake lever LR during the pressure increase control, the controller 100 starts the time measurement by the timer and starts the release determination (time-point t1).

When the operation angle $\theta$ continuously decreases during the first predetermined time T1 from the start of the release determination, the controller 100 determines that the operation on the rear brake lever LR is loosened, sets the release flag F, and starts the pressure reduction control (time-point t2). When the command current value $A_n$ at the time-point t2 is equal to or greater than the threshold Ath, the controller 100 reduces the command current value $A_n$ by the first pressure reduction amount D1 as indicated by a solid line. Accordingly, since the command current value $A_n$ gradually decreases at a first gradient G1 corresponding to the first pressure reduction amount D1, the hydraulic pressure of the front brake 20F can be gradually reduced at a first hydraulic pressure gradient corresponding to the first gradient G1.

When the command current value $A_n$ at the time-point t2 is less than the threshold Ath, the controller 100 reduces the command current value $A_n$ by the second pressure reduction amount D2 smaller than the first pressure reduction amount D1, as indicated by a two-dot chain line. Accordingly, since the command current value $A_n$ gradually decreases at a second gradient G2 that is gentler than the first gradient G1, the hydraulic pressure of the front brake 20F can be gradually reduced at a gentler second hydraulic pressure gradient corresponding to the second gradient G2.

Thereafter, when the operation angle $\theta$ is equal to or less than the second predetermined value $\theta$th2 (time-point t3), the controller 100 removes the release flag F, ends the pressure reduction control, and ends the braking force control. Here, in the drawing, for the sake of convenience, the command current value $A_n$ to be reduced at the first gradient G1 or the second gradient G2 is shown to be exactly 0 at the end of the braking force control, and depending on the value of the command current value $A_n$ at the time of the release determination, the command current value $A_n$ is 0 before the end of the braking force control or the command current value $A_n$ is a value larger than 0 at the end of the braking force control. When the command current value $A_n$ is larger than 0 at the end of the braking force control, the command current value $A_n$ is set to 0 in step S15 described above.

As described above, the following effects can be obtained according to the embodiment.

Since the braking force of the front brake 20F is gradually reduced when the rear brake lever LR is loosened, it is possible to reduce the feeling of discomfort brought to the rider when the rear brake lever LR is released.

Since the pressure reduction control is executed with the pressure reduction amount D corresponding to the value of the command current value $A_n$ adopted when the rear brake lever LR is loosened, an operation feeling can be improved.

Even when the rear brake lever LR is re-input during the pressure reduction control and the pressure increase control is resumed, a sudden increase in the braking force of the front brake 20F during the pressure increase control is restricted by the processing of step S4, and thus a vehicle body behavior can be stabilized.

Since the release determination is performed based on the operation amount of the rear brake lever LR, the release determination of the rear brake lever LR can be performed favorably even in a vehicle brake control device C that does not include a pressure sensor.

Since it is determined in the release determination whether the operation angle $\theta$ continuously decreases for the first predetermined time T1, the determination accuracy of the release determination can be improved.

Since the release flag F is removed when the operation angle $\theta$ is equal to or less than the second predetermined value $\theta$th2 smaller than the first predetermined value $\theta$th1, the pressure reduction control performed with the release flag F being set can be ended at an appropriate timing.

Since the release flag F is removed in a case where the operation angle $\theta$ increases when the release flag F is set, the pressure reduction control performed when the release flag F is set can be ended with the re-input of the rear brake lever LR as a trigger.

Since the determination as to the re-input of the rear brake lever LR is performed based on a fact that the operation angle $\theta$ continuously increases for the second predetermined time T2, the determination accuracy of the determination as to the re-input of the rear brake lever LR can be improved.

Since the release determination is performed using the angle sensor 53, it is possible to provide an inexpensive vehicle brake control device C.

The invention is not limited to the above-described embodiment, and can be used in various forms as exemplified below. In the following description, members having substantially the same structures as those of the above-described embodiment are denoted by the same reference signs, and a description thereof is omitted.

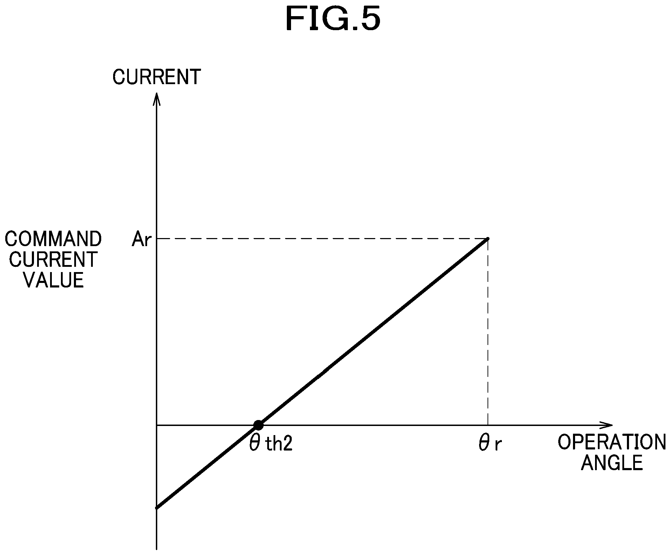

A method of gradually reducing the command current value in the pressure reduction control is not limited to the method described in the above-described embodiment. For example, as illustrated in FIG. 5, based on a command current value Ar and an operation angle $\theta$r occurring when it is determined that the rear brake lever LR is loosened, the controller 100 may gradually reduce the command current value $A_n$ in accordance with a decrease in the operation angle $\theta$ such that the command current value $A_n$ is 0 when the operation angle $\theta$ of the rear brake lever LR is the second predetermined value $\theta$th2.

Specifically, the command current value $A_n$ during the pressure reduction control may be calculated by the following equation (2).

$$A_n = a(\theta - \theta th2) \quad (2)$$

$$a = Ar/(\theta r - \theta th2)$$

Ar: a command current value at the time of release determination
$\theta$r: an operation angle at the time of release determination

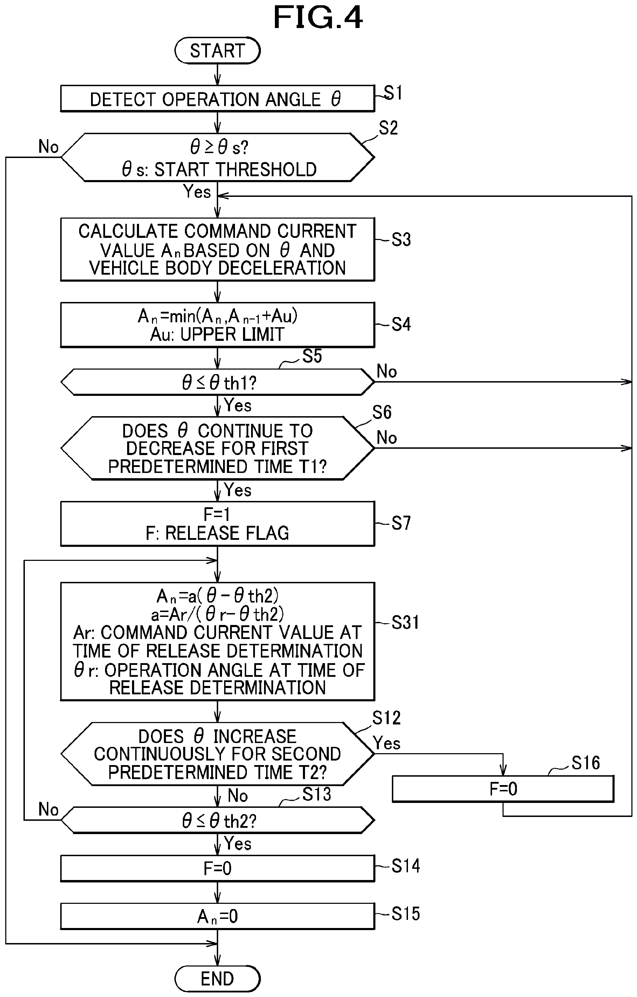

By calculating the command current value $A_n$ by the equation (2), the command current value $A_n$ gradually decreases at the above-described gradient a in accordance with a decrease in the operation angle $\theta$, and the command current value $A_n$ can be set to 0 when the operation angle $\theta$ is the second predetermined value $\theta$th2. It is sufficient that the controller 100 in this case executes the processing shown in FIG. 4.

The processing shown in FIG. 4 has a configuration in which a new step S31 is added instead of steps S8 to S11 in the processing shown in FIG. 2. In step S31, the command current value $A_n$ is set according to the above-described equation (2). After step S7, the controller 100 executes the processing of step S31, and then proceeds to the processing of step S12. When it is determined to be No in step S13, the controller 100 returns to the processing of step S31.

According to this configuration, it is possible to further restrict the command current value $A_n$ from suddenly becoming 0 when the operation angle θ is the second predetermined value θth2, that is, when the braking force control is ended, and thus it is possible to further reduce the feeling of discomfort brought to the rider.

Although the upper limit Au for limiting the increase in the braking force of the front brake 20F is set to a fixed value in the above-described embodiment, the upper limit Au may be variable. For example, an upper limit Au1 during the initial pressure increase control in the braking force control and an upper limit Au2 during the pressure increase control when the pressure increase control is resumed from the pressure reduction control may be set to different values. For example, Au2 < Au1 may be satisfied or Au2 > Au1 may be satisfied.

Although it is determined in the release determination that the release is performed when the operation angle θ continuously decreases during the first predetermined time T1 in the above-described embodiment, for example, it may be also determined that the release is performed when the operation angle θ intermittently decreases during the first predetermined time T1. As a method of determining whether the operation angle θ intermittently decreases, for example, a method of determining that the operation angle θ intermittently decreases when, among a plurality of control loops, the number of control loops in which the current value of the operation angle θ is smaller than the previous value is larger than the number of control loops in which the current value of the operation angle θ is larger than the previous value may be exemplified. The determination as to whether the operation angle θ continuously increases may also be changed to a method of determining whether the operation angle θ intermittently increases. The determination as to whether the operation angle θ intermittently increases can be made by the same method as the above-described method of determining whether the operation angle θ intermittently decreases.

Although the operation angle θ of the rear brake lever LR is exemplified as the operation amount in the above-described embodiment, the operation amount may be, for example, a stroke amount detected by a stroke sensor configured to detect a stroke of an operating member such as a brake lever or a foot brake, or may be a distance detected by a distance sensor such as an infrared ray sensor configured to detect a distance between an operating member and a support member movably supporting the operating member.

The wheel brake is not limited to a hydraulic brake, and may be, for example, an electromagnetic brake. The rear brake is not limited to a mechanical brake, and may be, for example, an electromagnetic brake or a hydraulic brake. When the rear brake is an electromagnetic brake or a hydraulic brake, the braking force of the rear brake may be controlled based on an operation amount of a brake operating member for a front wheel.

The vehicle provided with the wheel brake is not limited to the motorcycle MC, and may be any vehicle. For example, the vehicle may be a bar handle vehicle operated by a bar handle. The bar handle vehicle may be, for example, a three-wheeled vehicle or a four-wheeled vehicle.

The brake operating member is not limited to a lever, and may be, for example, a foot brake pedal.

The suction valve may be a normally closed solenoid valve.

The elements described in the above-described embodiment and the modification may be combined as desired.

## Claims

1. A vehicle brake control device comprising:

   a controller configured to control a braking force of a wheel brake based on an operation amount of a brake operating member, wherein
   when the operation amount of the brake operating member is equal to or less than a first predetermined value, the controller starts release determination of determining whether the brake operating member is loosened, and
   when the operation amount decreases from the first predetermined value during the release determination, the controller determines that the brake operating member is loosened.

2. The vehicle brake control device according to claim 1, wherein
   when the operation amount continuously decreases for a first predetermined time during the release determination, the controller determines that the brake operating member is loosened.

3. The vehicle brake control device according to claim 1, wherein
   the controller

   sets a release flag when it is determined that the brake operating member is loosened, and
   removes the release flag when the operation amount is equal to or less than a second predetermined value smaller than the first predetermined value.

4. The vehicle brake control device according to claim 3, wherein
   the controller removes the release flag in a case where the operation amount increases when the release flag is set.

**EP 4 549 262 A1**

**5.** The vehicle brake control device according to claim 4, wherein
the controller removes the release flag in a case where the operation amount continuously increases for a second predetermined time when the release flag is set.

**6.** The vehicle brake control device according to any one of claims 1 to 5, further comprising:

an angle sensor configured to detect an angle of the brake operating member, wherein
the controller acquires, as the operation amount, an angle detected by the angle sensor.

# FIG.1

# FIG.2

START

DETECT OPERATION ANGLE $\theta$ — S1

$\theta \geq \theta s$?
$\theta s$: START THRESHOLD — S2
No / Yes

CALCULATE COMMAND CURRENT VALUE $A_n$ BASED ON $\theta$ AND VEHICLE BODY DECELERATION — S3

$A_n = \min(A_n, A_{n-1} + Au)$
Au: UPPER LIMIT — S4

$\theta \leq \theta th1$? — S5
No / Yes

DOES $\theta$ CONTINUE TO DECREASE FOR FIRST PREDETERMINED TIME T1? — S6
No / Yes

F=1
F: RELEASE FLAG — S7

$A_n \geq Ath$?
$A_n$: COMMAND CURRENT VALUE
Ath: THRESHOLD — S8
Yes / No

D=D1
D: PRESSURE REDUCTION AMOUNT
D1: FIRST PRESSURE REDUCTION AMOUNT — S9

D=D2
D2: SECOND PRESSURE REDUCTION AMOUNT
(D2<D1) — S10

$A_n = A_{n-1} - D$ — S11

DOES $\theta$ INCREASE CONTINUOUSLY FOR SECOND PREDETERMINED TIME T2? — S12
No / Yes

$\theta \leq \theta th2$? — S13
No / Yes

F=0 — S16

F=0 — S14

$A_n = 0$ — S15

END

EP 4 549 262 A1

# FIG.3

OPERATION ANGLE

$\theta$ th1

$\theta$ th2

0

COMMAND CURRENT VALUE

Ath

G1(D1)

G2(D2)

RELEASE FLAG

1

0

TIMER

T1

0

t0    t1  t2    t3

12

# FIG.4

START

DETECT OPERATION ANGLE $\theta$ — S1

$\theta \geq \theta s?$
$\theta s$: START THRESHOLD — S2

No / Yes

CALCULATE COMMAND CURRENT
VALUE $A_n$ BASED ON $\theta$ AND
VEHICLE BODY DECELERATION — S3

$A_n = \min(A_n, A_{n-1} + Au)$
Au: UPPER LIMIT — S4

$\theta \leq \theta th1?$ — S5

No / Yes

DOES $\theta$ CONTINUE TO
DECREASE FOR FIRST
PREDETERMINED TIME T1? — S6

No / Yes

F=1
F: RELEASE FLAG — S7

$A_n = a(\theta - \theta th2)$
$a = Ar/(\theta r - \theta th2)$
Ar: COMMAND CURRENT VALUE AT
TIME OF RELEASE DETERMINATION
$\theta r$: OPERATION ANGLE AT TIME OF
RELEASE DETERMINATION — S31

DOES $\theta$ INCREASE
CONTINUOUSLY FOR SECOND
PREDETERMINED TIME T2? — S12

Yes

F=0 — S16

No — S13

$\theta \leq \theta th2?$ — S13

No / Yes

F=0 — S14

$A_n = 0$ — S15

END

# FIG.5

## INTERNATIONAL SEARCH REPORT

| International application No. |
| --- |
| **PCT/JP2023/022205** |

**A. CLASSIFICATION OF SUBJECT MATTER**

*B60T 7/02*(2006.01)i; *B60T 8/172*(2006.01)i; *B60T 8/1761*(2006.01)i
FI: B60T8/172 Z; B60T8/1761; B60T7/02 D

According to International Patent Classification (IPC) or to both national classification and IPC

**B. FIELDS SEARCHED**

Minimum documentation searched (classification system followed by classification symbols)

B60T7/02; B60T8/172; B60T8/1761

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2022-62856 A (TOYOTA MOTOR CORP) 21 April 2022 (2022-04-21) paragraphs [0051]-[0062], fig. 2 | 1, 6 |
| A | | 2-5 |
| A | JP 2002-067910 A (AISIN SEIKI CO LTD) 08 March 2002 (2002-03-08) entire text, all drawings | 1-6 |
| A | US 2018/0099649 A1 (MANDO CORPORATION) 12 April 2018 (2018-04-12) entire text, all drawings | 1-6 |

☐ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **19 July 2023** | **15 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2023/022205**

| Patent document cited in search report | | | Publication date (day/month/year) | Patent family member(s) | Publication date (day/month/year) |
|---|---|---|---|---|---|
| JP | 2022-62856 | A | 21 April 2022 | US 2022/0111844 A1 paragraphs [0060]-[0071], fig. 2 CN 114407896 A | |
| JP | 2002-067910 | A | 08 March 2002 | (Family: none) | |
| US | 2018/0099649 | A1 | 12 April 2018 | DE 102017009468 A1 KR 10-2018-0039994 A CN 107914693 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008195138 A